# EUROPEAN PATENT APPLICATION

(11) **EP 3 904 737 A1**
(43) Date of publication of application: **03.11.2021**
(21) Application number: 19901412.7
(22) Date of filing: 08.11.2019
(51) Int. Cl.: F16K 11/065, F16K 31/122, F25B 41/04

(54) **FLOW PATH SWITCHING VALVE**

(30) Priority: 25.12.2018 JP 2018241010
(71) Applicant: Fujikoki Corporation, Tokyo 158-0082 (JP)
(72) Inventor: KIBUNE Hitoshi, Tokyo 158-0082 (JP); MORITA Noriyuki, Tokyo 158-0082 (JP)
(74) Representative: Ter Meer Steinmeister & Partner
(86) International application number: PCT/JP2019/043942
(87) International publication number: WO 2020/137191

(57) **Abstract**

Provided is a flow channel switching valve with a simple configuration that can press the position close to a seal face of a main valve element in switching the flow channel, reduce the occurrence of a stick-slip phenomenon, and thus can reduce the occurrence of abnormal sounds or the wear of the seal faces of the main valve element. A coupling body (25) for moving a main valve element (15) within a main valve chamber (12) along with the reciprocating motion of first and second pistons (21, 22) is formed of a piece of plate member, which includes a flat plate portion (25a) disposed in parallel with valve seat faces of first and second main valve mounts (13, 14). The flat plate portion (25a) is adapted to fit and support the main valve element (15) therein and, along with the reciprocating motion of the first and second pistons (21, 22), press and move the main valve element (15) by means of pressing plate portions (i.e., a central pressing plate portion (25eA) and end pressing plate portions (25eB) formed integrally with the flat plate portion (25a)) extending toward annular seal faces of a pair of first and second slide valve elements (15A, 15B) forming the main valve element (15), which slide on the valve seat faces of the first and second main valve mounts (13, 14).

## Description

### Technical Field

The present invention relates to a flow channel switching valve that switches a flow channel by moving a valve element. For example, the present invention relates to a flow channel switching valve suitable for switching a flow channel in a heat pump cooling and heating system or the like.

### Background Art

A typical heat pump cooling and heating system, such as an indoor air conditioner and an automotive air conditioner, includes a flow channel switching valve (e.g., four-way switching valve or six-way switching valve) as a means to switch a flow channel (i.e., flow direction) in addition to a compressor, an outdoor heat exchanger, an indoor heat exchanger, an expansion valve, and the like, and is adapted to switch the operation mode (between cooling operation and heating operation) with the flow channel switching valve.

A well-known flow channel switching valve assembled into such a heat pump cooling and heating system or the like as described above includes a slide-type flow channel switching valve as described in, for example, Patent Literature 1. This slide-type flow channel switching valve (i.e., six-way switching valve) includes a valve body (i.e., main valve housing) incorporating a slide-type main valve element, and an electromagnetic pilot valve (i.e., four-way pilot valve), in which the main valve housing is provided with a plurality of ports (six ports pA to pF) and has the slide-type main valve element disposed therein in a slidable manner in the horizontal direction. On the right and left sides of the slide-type main valve element in the main valve housing, two operation chambers, which are formed of a pair of right and left piston-type gaskets each coupled to the slide-type main valve element, are coupled to the discharge side and the suction side of the compressor via the pilot valve. The slide-type flow channel switching valve (i.e., six-way switching valve) selectively introduces and discharges a high-pressure fluid (i.e., refrigerant) into and from the two operation chambers by using the pilot valve, and makes the slide-type main valve element slide in the horizontal direction in response to the pressure difference between the two operation chambers, thereby switching the flow channel.

More specifically, the right and left pistons forming the two operation chambers are coupled to each other in an integrally movable manner by a coupling body, and the slide-type main valve element is fitted in and fixed to the opening formed in the coupling body. The slide-type main valve element is adapted to slide on the main valve mount (or the valve seat face thereof) provided with a plurality of ports (five ports pB to pF) by means of the coupling body along with the reciprocating motion of the pistons in introducing and discharging the high-pressure fluid (i.e., refrigerant) into and from the two operation chambers. The slide-type main valve element includes an internal cavity (i.e., communication passage) having a size that allows two adjacent ports of the plurality of ports to selectively communicate with each other. Along with the movement of the slide-type main valve element, the plurality of ports are allowed to selectively communicate with each other via the internal cavity, thereby switching the flow channel.

Meanwhile, Patent Literature 2 has already proposed modifications of the slide-type flow channel switching valve (six-way switching valve) described in Patent Literature 1, in which the arrangement and configuration of the main valve mount provided with ports and the slide-type main valve element are modified in order to reduce valve leakage and pressure loss and to improve system efficiencies.

### Citation List

### Patent Literature

Patent Literature 1: JP H08-170864 A
Patent Literature 2: JP 2018-044666 A

### Summary of Invention

### Technical Problem

By the way, in the above-described conventional flow channel switching valve, it is necessary that the slide-type main valve element is moved while a predetermined position of the slide-type main valve element is pressed by the coupling body in switching the flow channel. However, when the predetermined position of the pressed portion is too far from the seal face of the slide-type main valve element (i.e., the sliding face with respect to the valve seat face of the main valve mount), a stick-slip phenomenon may tend to occur, and abnormal sounds and the wear of the seal face of the slide-type main valve element may tend to occur. Therefore, it is necessary that the predetermined position of the pressed portion is located as close as possible to the seal face of the slide-type main valve element.

In the above-described conventional flow channel switching valve, however, the coupling body that couples the pistons and the slide-type main valve element is basically made of a piece of plate member disposed to face the valve seat face of the main valve mount (in other words, disposed in parallel with the valve seat face) on the center line (i.e., axis) of the main valve housing. For this reason, in order to press the position close to the seal face of the slide-type main valve element by the coupling body, it is needed to appropriately redesign the dimensions and shapes of the components including the slide-type main valve element, the main valve housing, the main valve mount, for example. In particular, in the flow channel switching valve described in Patent Literature 2, a pair of slide valve elements forming the slide-type main valve element is disposed with their back sides facing each other in a direction perpendicular to the valve seat face of the main valve mount, and a U-turn passage (communication passage) that allows two adjacent ports to selectively communicate with each other is formed in each of the slide valve elements. Therefore, it is difficult for the coupling body to press the position close to the seal face of each of the slide valve elements forming the slide-type main valve element.

The present invention has been made in view of the foregoing, and it is an object of the present invention to provide a flow channel switching valve with a simple configuration that can press the position close to the seal face of the main valve element in switching the flow channel, reduce the occurrence of a stick-slip phenomenon, and thus can reduce the occurrence of abnormal sounds or the wear of the seal face of the main valve element.

### Solution to Problem

In view of the foregoing, a flow channel switching valve according to the present invention basically includes a tubular main valve housing including a piston and a main valve chamber; a main valve mount having a valve seat face with a plurality of ports; a slide-type main valve element arranged within the main valve chamber in a movable manner in an axial direction, the slide-type main valve element being adapted to slidably come into contact with the valve seat face; and a coupling body for moving the main valve element along with a reciprocating motion of the piston, in which the main valve element is moved within the main valve chamber by the coupling body so that communication of the plurality of ports is switched, in which the main valve housing is provided with a plurality of ports on each of opposite sides with respect to an axis thereof, the main valve element includes a pair of slide valve elements that is disposed with back sides facing each other in a direction perpendicular to the valve seat face of the main valve mount, the pair of slide valve elements each having a U-turn passage that allows the plurality of ports to selectively communicate with each other; and the coupling body is made of a piece of plate member including a flat plate portion disposed in parallel with the valve seat face of the main valve mount, the flat plate portion being adapted to fit and support the main valve element therein, and along with the reciprocating motion of the piston, press and move the main valve element by means of a pressing plate portion extending toward a seal face of at least one of the pair of slide valve elements of the main valve element, the seal face being adapted to slide on the valve seat face of the main valve mount.

In a preferred aspect, the flat plate portion is disposed on the axis of the tubular main valve housing.

In another preferred aspect, the flat plate portion is provided with an opening for fitting each of the pair of slide valve elements therein in a slidable manner in the direction perpendicular to the valve seat face of the main valve mount, and for pressing and moving each of the pair of slide valve elements in an integrally movable manner in the axial direction along with the reciprocating motion of the piston.

In another preferred aspect, the pressing plate portion is formed to be continuous from the flat plate portion.

In another preferred aspect, the pressing plate portion is formed to be continuous from an edge portion of the opening of the flat plate portion.

In further preferred aspect, the pressing plate portion includes a first pressing plate portion extending from the flat plate portion toward the seal face of one of the pair of slide valve elements and a second pressing plate portion extending from the flat plate portion toward the seal face of the other one of the pair of slide valve elements.

In further preferred aspect, the pressing plate portion is formed by bending from the flat plate portion in the perpendicular direction.

In further preferred aspect, the pressing plate portion is formed in the direction perpendicular to the axis of the tubular main valve housing.

In further preferred aspect, the pressing plate portion is formed along an outer peripheral face of the main valve element.

In still another preferred aspect, the pressing plate portion is fixed to an outer peripheral face of the main valve element.

In yet another preferred aspect, the pressing plate portion is made of a flat plate fixed to the outer peripheral face of the main valve element.

In yet another preferred aspect, the pressing plate portion is fixed to one of the pair of slide valve elements of the main valve element.

In yet another preferred aspect, the pressing plate portion is adapted to come into contact with both of the pair of slide valve elements of the main valve element.

In yet another preferred aspect, the pressing plate portion is adapted to come into contact with only one of the pair of slide valve elements of the main valve element.

In yet another preferred aspect, the pressing plate portion is fixed in the direction perpendicular to the axis of the tubular main valve housing.

In yet another preferred aspect, the pressing plate portion is fixed along the outer peripheral face of the main valve element.

In yet another preferred aspect, the pressing plate portion is fitted into a recessed face provided on an outer peripheral face of the main valve element.

In yet another preferred aspect, the pressing plate portion is made of material having a higher rigidity than that of the main valve element.

In yet another preferred aspect, the coupling body is formed to be rotationally symmetrical about a rotation axis perpendicular to the valve seat face of the main valve mount.

### Advantageous Effects of Invention

In the flow channel switching valve according to the present invention, the coupling body for moving the main valve element in the main valve chamber along with the reciprocating motion of the pistons is formed of a piece of plate member, which includes a flat plate portion disposed in parallel with the valve seat face of the main valve mount. The flat plate portion is adapted to fit and support the main valve element therein and, along with the reciprocating motion of the pistons, press and move the main valve element by means of a pressing plate portion extending toward the seal face of at least one of the pair of the slide valve elements forming the main valve element, which slides on the valve seat face of the main valve mount. Thus, with a simple configuration in which a small improvement is added to the coupling body, for example, the flow channel switching valve according to the present invention can press the position close to the seal face of the main valve element in switching the flow channel, reduce the occurrence of a stick-slip phenomenon, and thus can effectively reduce the occurrence of abnormal sounds or the wear of the seal face of the main valve element, as compared to the conventional flow channel switching valve in which the coupling body is made of a piece of plate member disposed in parallel with the valve seat face of the main valve mount on the center line (i.e., axis) of the main valve housing, for example.

The problems to be solved, configurations, and operational advantages other than those described above will become clear from the embodiments described below.

### Brief Description of Drawings

Fig. 1 is a vertical cross-sectional view showing a first communication state (during cooling operation) of a first embodiment of a flow channel switching valve (six-way switching valve) in accordance with the present invention.
Fig. 2 is a vertical cross-sectional view showing a second communication state (during heating operation) of the first embodiment of the flow channel switching valve (six-way switching valve) in accordance with the present invention.
Fig. 3 is an enlarged vertical cross-sectional view of a main part of the six-way switching valve illustrated in Fig. 1.
Fig. 4 is a cross-sectional view in the direction of the arrow U-U in Fig. 1.
Fig. 5 is a perspective view of a main valve element and a coupling body of the first embodiment of the flow channel switching valve (six-way switching valve) in accordance with the present invention.
Fig. 6A is a vertical cross-sectional view of a coupling body of the first embodiment of the flow channel switching valve (six-way switching valve) in accordance with the present invention.
Fig. 6B is a left side view of a coupling body of the first embodiment of the flow channel switching valve (six-way switching valve) in accordance with the present invention.
Fig. 6C is a top view of a coupling body of the first embodiment of the flow channel switching valve (six-way switching valve) in accordance with the present invention.
Fig. 7A is an enlarged vertical cross-sectional view showing a first communication state (during cooling operation) (i.e., when current is not supplied) of a four-way pilot valve that is used in the flow channel switching valve (six-way switching valve) in accordance with the present invention.
Fig. 7B is an enlarged vertical cross-sectional view showing a second communication state (during heating operation) (i.e., when current is supplied) of a four-way pilot valve that is used in the flow channel switching valve (six-way switching valve) in accordance with the present invention.
Fig. 8 is a vertical cross-sectional view showing a second embodiment (or a first communication state thereof (during cooling operation)) of the flow channel switching valve (six-way switching valve) in accordance with the present invention.
Fig. 9 is a cross-sectional view in the direction of the arrow V-V in Fig. 8.
Fig. 10 is a perspective view of a main valve element and a coupling body of the second embodiment of the flow channel switching valve (six-way switching valve) in accordance with the present invention.
Fig. 11A is a vertical cross-sectional view of a coupling body of the second embodiment of the flow channel switching valve (six-way switching valve) in accordance with the present invention.
Fig. 11B is a left side view of a coupling body of the second embodiment of the flow channel switching valve (six-way switching valve) in accordance with the present invention.
Fig. 11C is a top view of a coupling body of the second embodiment of the flow channel switching valve (six-way switching valve) in accordance with the present invention.
Fig. 12 is a vertical cross-sectional view showing a third embodiment (or a first communication state thereof (during cooling operation)) of the flow channel switching valve (six-way switching valve) in accordance with the present invention.
Fig. 13 is a cross-sectional view in the direction of the arrow X-X in Fig. 12.
Fig. 14 is a perspective view of a main valve element and a coupling body of the third embodiment of the flow channel switching valve (six-way switching valve) in accordance with the present invention.
Fig. 15A is a vertical cross-sectional view of a coupling body of the third embodiment of the flow channel switching valve (six-way switching valve) in accordance with the present invention.
Fig. 15B is a left side view of a coupling body of the third embodiment of the flow channel switching valve (six-way switching valve) in accordance with the present invention.
Fig. 15C is a top view of a coupling body of the third embodiment of the flow channel switching valve (six-way switching valve) in accordance with the present invention.

### Description of Embodiments

Hereinafter, embodiments of the present invention will be described with reference to the drawings.

### <First embodiment>

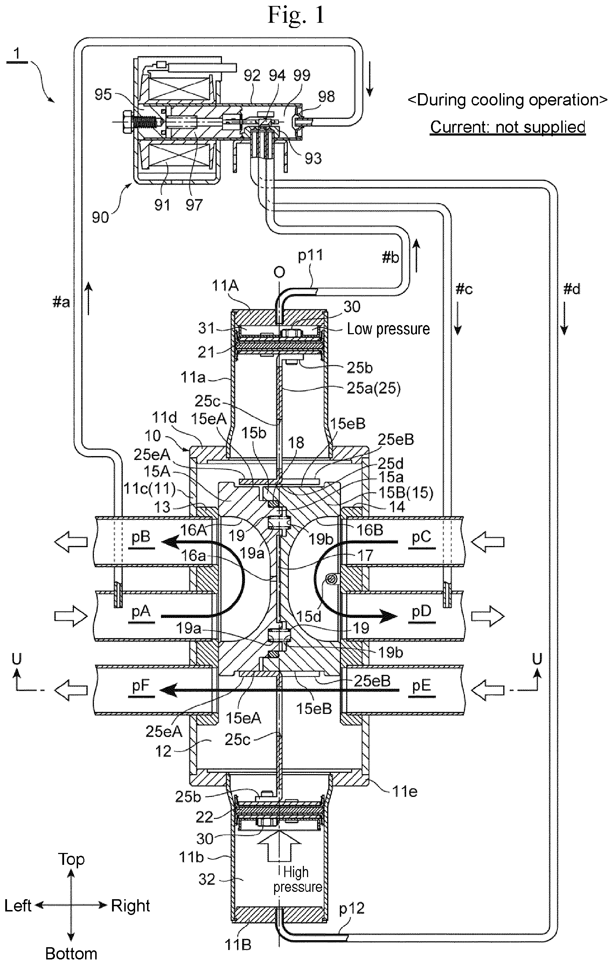

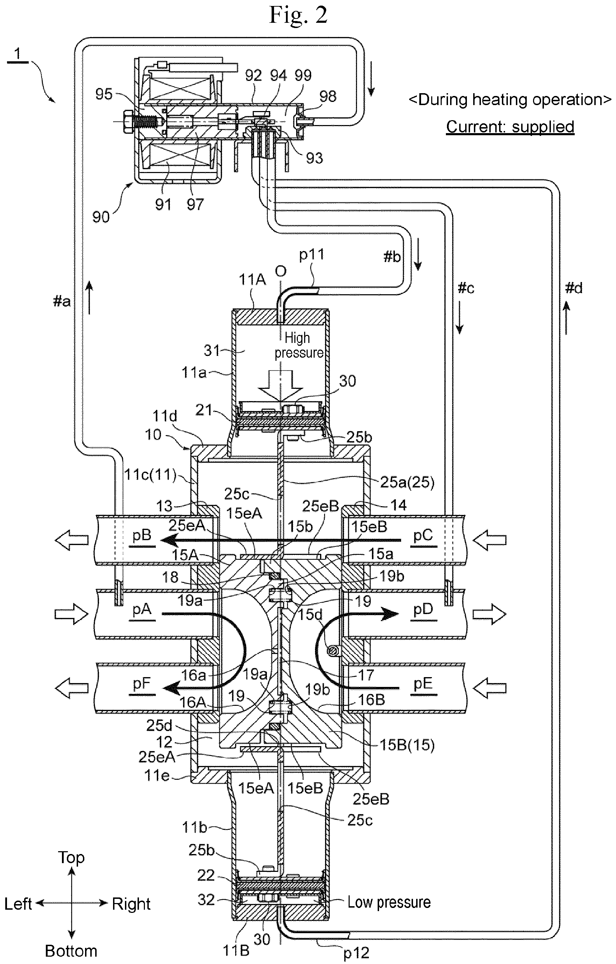

Fig. 1 and Fig. 2 are vertical cross-sectional views showing a first embodiment of a six-way switching valve as the flow channel switching valve in accordance with the present invention. Fig. 1 illustrates a first communication state (during cooling operation), and Fig. 2 illustrates a second communication state (during heating operation).

It should be noted that in this specification, descriptions indicating positions or directions, such as top (upper), bottom (lower), left, right, front, and rear (back), are given for the sake of convenience in accordance with the drawings to avoid making explanation complicated, and do not always indicate the positions or directions while the valve is actually assembled into a heat pump cooling and heating system or the like.

Further, in each drawing, a gap formed between some members, a clearance between some members, and the like may be depicted larger or smaller than their actual dimensions to help understand the present invention and also for the sake of convenience to create the drawing.

A six-way switching valve 1 of the embodiment illustrated in the drawings is a slide-type flow channel switching valve that is used as a six-way switching valve in a heat pump cooling and heating system, for example, and basically includes a six-way valve body 10 of a cylinder type and a single electromagnetic four-way pilot valve 90 as a pilot valve. It should be noted that the six-way switching valve 1 of the present embodiment includes six ports, to which reference numerals are given in a manner corresponding to ports pA to pF of the six-way switching valves disclosed in the aforementioned Patent Literature 1, 2. For the basic configurations of the heat pump cooling and heating system including the six-way switching valve 1, refer to the aforementioned Patent Literature 1, 2.

### [Configuration of six-way valve body 10]

The six-way valve body 10 includes a tubular main valve housing 11 made of metal such as brass or stainless steel. In this main valve housing 11, a first operation chamber 31, a first piston 21, a main valve chamber 12, a second piston 22, and a second operation chamber 32 are disposed in this order from its end (i.e., upper end). The first and second pistons 21, 22 each include a gasket with a spring so that its outer peripheral portion comes into pressure-contact with the inner peripheral face of the main valve housing 11 to hermetically divide the main valve housing 11.

Specifically, the main valve housing 11 includes a trunk portion 11c having a relatively large diameter and an open upper end to which a thick disk-like upper coupling cap 11d is hermetically attached. The upper coupling cap 11d has a central hole to which a first piston portion 11a made of a pipe member (having a relatively small diameter) is hermetically fixed through brazing or the like, and the first piston 21 is disposed in this first piston portion 11a. Likewise, the trunk portion 11c has an open lower end to which a thick disk-like lower coupling cap 11e is hermetically attached. The lower coupling cap 11e has a central hole to which a second piston portion 11b made of a pipe member (having a relatively small diameter) is hermetically fixed through brazing or the like, and the second piston 22 is disposed in this second piston portion 11b.

A thick disk-like upper end cap member 11A acting as a stopper for blocking the upward movement of the first piston 21 defining the first operation chamber 31 with a variable capacity is hermetically fixed to the upper end of the main valve housing 11 (or the first piston portion 11a thereof) through brazing or the like. A thick disk-like lower end cap member 11B acting as a stopper for blocking the downward movement of the second piston 22 defining the second operation chamber 32 with a variable capacity is hermetically fixed to the lower end of the main valve housing 11 (or the second piston portion 11b thereof) through brazing or the like. A port p11 and a port p12 are respectively attached to the upper end cap member 11A and the lower end cap member 11B to introduce/discharge a high-pressure fluid (i.e., refrigerant) into/from the first operation chamber 31 and the second operation chamber 32.

The main valve housing 11 (or the main valve chamber 12 thereof) includes six ports in total.

Specifically, in the center of the left part of the main valve chamber 12, a first main valve mount (i.e., valve seat) 13 made of metal, for example, and having a face (right face) as a flat valve seat face is hermetically fixed to the trunk portion 11c (or the inner periphery thereof) of the main valve housing 11 through brazing or the like. On the valve seat face of the first main valve mount 13, three ports (i.e., a port pB, a port pA, a port pF in this order from the upper end) each made of a pipe joint extending to the left align vertically (i.e., align in the direction along axis O) to open at approximately regular intervals.

Meanwhile, in the center of the right part of the main valve chamber 12 (i.e., the position facing the first main valve mount 13, that is, the position opposite to the first main valve mount 13 with respect to axis O), a second main valve mount (i.e., valve seat) 14 made of metal, for example, and having a face (left face) as a flat valve seat face is hermetically fixed to the trunk portion 11c (or the inner periphery thereof) of the main valve housing 11 through brazing or the like. On the valve seat face of the second main valve mount 14, three ports (i.e., a port pC, a port pD, a port pE in this order from the upper end) each made of a pipe joint extending to the right align vertically (i.e., align in the direction along axis O) to open at approximately regular intervals.

The ports (i.e., the port pB, the port pA, the port pF) provided in the first main valve mount 13 and the ports (i.e., the port pC, the port pD, the port pE) provided in the second main valve mount 14 are located to face each other (i.e., opposite to each other with respect to axis O), and in this example, the ports pA to pF provided in the first main valve mount 13 and the second main valve mount 14 have approximately the same diameter.

The main valve chamber 12, specifically, the trunk portion 11c of the main valve housing 11, includes a slide-type main valve element 15 having a rectangular cross-section with a racetrack-shaped annular seal face such that it is movable in the direction along axis O (i.e., vertical direction) and its opposite faces (i.e., left face and right face) slidably come into contact with the respective valve seat faces of the first main valve mount 13 and the second main valve mount 14. In this example, the dimensions of the main valve element 15 in the horizontal direction are slightly larger than the outside diameter of the first piston portion 11a and the second piston portion 11b of the main valve housing 11.

The main valve element 15 is made of synthetic resin, for example, and includes a first slide valve element 15A on the side of the first main valve mount 13 (i.e., on the left side) and a second slide valve element 15B on the side of the second main valve mount 14 (i.e., on the right side) that are disposed with their back sides facing each other.

On the left face side (i.e., the side opposite to the second slide valve element 15B) of the first slide valve element 15A, a first U-turn passage (communication passage) 16A made of a cup-like recess is provided to have a size that allows two adjacent ports (i.e., the port pB and the port pA, or the port pA and the port pF), of the three ports opening on the valve seat face of the first main valve mount 13, to selectively communicate with each other. Meanwhile, on the right face side (i.e., the side opposite to the first slide valve element 15A) of the second slide valve element 15B, a second U-turn passage (communication passage) 16B made of a cup-like recess is provided to have a size that allows two adjacent ports (i.e., the port pC and the port pD, or the port pD and the port pE), of the three ports opening on the valve seat face of the second main valve mount 14, to selectively communicate with each other.

Meanwhile, on the left face (i.e., the face opposite to the first slide valve element 15A) of the second slide valve element 15B, a tubular portion 15b having a shape (that is, a square tubular shape) substantially equal to the outer shape of the second slide valve element 15B is provided in an extended manner (to the left beyond the axis (i.e., center line) O). On the right face (i.e., the face opposite to the second slide valve element 15B) of the first slide valve element 15A, a short tubular fitting protrusion 15a having a shape slightly smaller than the outer shape of the first slide valve element 15A (in other words, the outer shape of the second slide valve element 15B) is provided in a protruding manner (to the right). When the fitting protrusion 15a is slidably fitted into the tubular portion 15b (with an O-ring 18 interposed in the step portion provided between the fitting protrusion 15a and the tubular portion 15b), the first slide valve element 15A and the second slide valve element 15B are slightly movable mutually in the horizontal direction (i.e., the direction perpendicular to axis O, in which the ports (i.e., the port pB, the port pA, the port pF) provided in the first main valve mount 13 face the ports (i.e., the port pC, the port pD, the port pE) provided in the second main valve mount 14, that is, the direction perpendicular to the valve seat faces of the first main valve mount 13 and the second main valve mount 14), and are integrally movable in the vertical direction (i.e., in the direction along axis O).

It should be noted that the fitting protrusion 15a of the first slide valve element 15A and the tubular portion 15b of the second slide valve element 15B may be in the opposite arrangement. That is, a tubular portion may be provided in the first slide valve element 15A, and a fitting protrusion may be provided in the second slide valve element 15B, and then the fitting protrusion of the second slide valve element 15B may be internally fitted into the tubular portion of the first slide valve element 15A to combine the first slide valve element 15A and the second slide valve element 15B.

In the illustrated example, a small gap is formed between the right face (or a portion inside of the fitting protrusion 15a thereon) of the first slide valve element 15A and the left face (or a portion inside of the fitting protrusion 15a thereon) of the second slide valve element 15B, and a communication hole 16a, which is a horizontal hole communicating the first U-turn passage 16A and the gap, is provided in the first slide valve element 15A (or the bottom of the first U-turn passage 16A thereof). The O-ring 18 as a seal member is interposed between the fitting protrusion 15a and the tubular portion 15b. It is needless to mention that instead of the O-ring 18, a seal member such as a rip seal may be used.

In this configuration, the inner part including the gap with respect to the O-ring 18 defines a pressure chamber 17 that receives a high-pressure fluid (i.e., refrigerant) through the first U-turn passage 16A and the communication hole 16a via the port (i.e., discharge-side high-pressure port) pA. The pressure chamber 17 is sealed from the main valve chamber 12 by the O-ring 18 disposed therebetween.

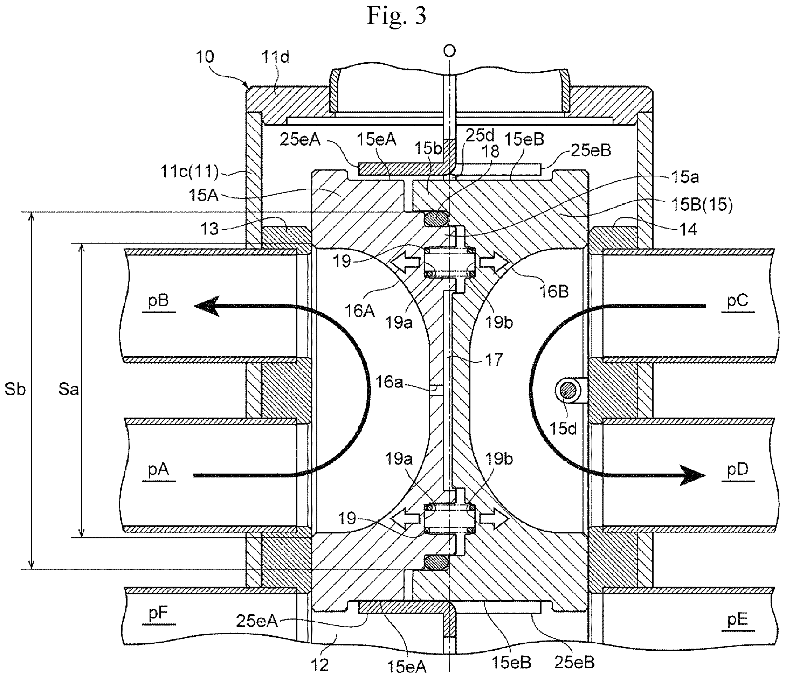

As clearly seen in Fig. 3 in conjunction with Fig. 1 and Fig. 2, as seen in the horizontal direction (i.e., the direction perpendicular to axis O), a pressure receiving area Sb of the first slide valve element 15A on the side of the pressure chamber 17 (i.e., on the right face side of the first slide valve element 15A) is greater than a pressure receiving area Sa of the first slide valve element 15A on the side of the first main valve mount 13 (i.e., on the left face side the first slide valve element 15A).

More specifically, the projected area of the pressure chamber 17 on the plane perpendicular to the horizontal direction, that is, the projected area (i.e., pressure receiving area Sb) of the face on which the first slide valve element 15A (or the right face thereof) receives the leftward pressure by the high-pressure refrigerant introduced into the pressure chamber 17, is greater than the projected area of the annular seal face on the side of the first main valve mount 13 on the plane perpendicular to the horizontal direction, that is, the projected area (i.e., pressure receiving area Sa) of the face on which the first slide valve element 15A (or the left face thereof) receives the rightward pressure by the high-pressure refrigerant flowing through the port (i.e., inside of the annular seal face).

In this configuration, when the high-pressure refrigerant is introduced into the first U-turn passage 16A via the port (i.e., discharge-side high-pressure port) pA and part of the high-pressure refrigerant introduced into the first U-turn passage 16A is filled into the pressure chamber 17 via the communication hole 16a, the right face of the second slide valve element 15B (or the annular seal face thereof) is pressed against the valve seat face of the second main valve mount 14 due to the pressure applied by the pressure chamber 17 (or the high-pressure refrigerant therein) (more specifically, the pressure difference between the pressure applied by the pressure chamber 17 (or the high-pressure refrigerant therein) and the pressure applied by the refrigerant (i.e., low-pressure refrigerant) flowing through the second U-turn passage 16B), and the left face of the first slide valve element 15A (or the annular seal face thereof) is pressed against the valve seat face of the first main valve mount 13 due to the difference between a pressure load applied by the pressure chamber 17 (or the high-pressure refrigerant therein) and a pressure load applied by the refrigerant (i.e., high-pressure refrigerant) flowing through the first U-turn passage 16A.

In addition, in this example, a plurality of spring receiving holes 19a, 19b are respectively formed on the right face of the first slide valve element 15A and the left face of the second slide valve element 15B (in the illustrated example, on the portions facing the pressure chamber 17). The spring receiving holes 19a, 19b have disposed therein, in a compressed state, a compression coil spring 19 adapted to urge the first slide valve element 15A and the second slide valve element 15B in the opposite directions (i.e., in the direction to separate them from each other) (in the illustrated example, two compression coil springs 19 are loaded in the vertical positions between the right face of the first slide valve element 15A and the left face of the second slide valve element 15B). This configuration also allows the left face of the first slide valve element 15A (or the annular seal face thereof) to come into pressure contact with (i.e., to be urged against) the valve seat face of the first main valve mount 13 and allows the right face of the second slide valve element 15B (or the annular seal face thereof) to come into pressure contact with (i.e., to be urged against) the valve seat face of the second main valve mount 14.

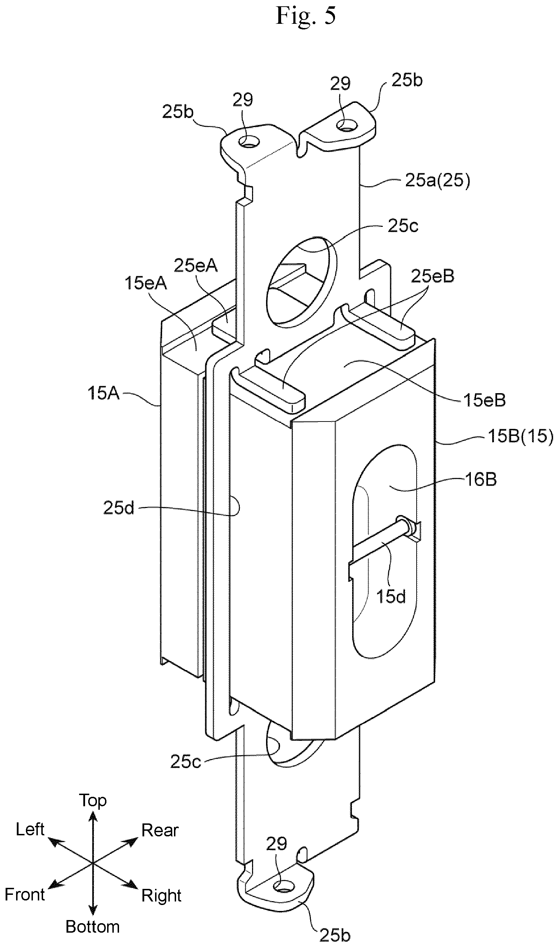

It should be noted that in this example, a reinforcing pin 15d for shape-retaining is provided across in the front-to-back direction in the approximate center of the second U-turn passage 16B of the second slide valve element 15B through which a low-pressure refrigerant flows (see also Fig. 5).

In addition, in this example, the upper and lower faces (i.e., outer peripheral faces) of the first slide valve element 15A and the second slide valve element 15B forming the main valve element 15 each include recessed faces 15eA, 15eB into which pressing plate portions (i.e., central pressing plate portion 25eA, end pressing plate portion 25eB) of the coupling body 25 (described later) are fitted (with a small gap therebetween in the horizontal direction).

As described above, the main valve element 15 includes the first slide valve element 15A and the second slide valve element 15B that are integrally moved in the direction along axis O, and is adapted to selectively operate in the cooling position (i.e., upper end position) as illustrated in Fig. 1, where the port pF is opened such that the port pB and the port pA are allowed to communicate with each other through the first U-turn passage 16A of the first slide valve element 15A, and the port pE is opened such that the port pC and the port pD are allowed to communicate with each other through the second U-turn passage 16B of the second slide valve element 15B, and the heating position (i.e., lower end position) as illustrated in Fig. 2, where the port pB is opened such that the port pA and the port pF are allowed to communicate with each other through the first U-turn passage 16A of the first slide valve element 15A, and the port pC is opened such that the port pD and the port pE are allowed to communicate with each other through the second U-turn passage 16B of the second slide valve element 15B.

The first slide valve element 15A of the main valve element 15 is located immediately above the two ports (i.e., the port pB and the port pA, or the port pA and the port pF) of the three ports except during the movement. Meanwhile, the second slide valve element 15B of the main valve element 15 is located immediately above the two ports (i.e., the port pC and the port pD, or the port pD and the port pE) of the three ports except during the movement. At this time, the first slide valve element 15A and the second slide valve element 15B are respectively pressed to the left and to the right by the pressure applied by the pressure chamber 17 (or the high-pressure refrigerant introduced thereinto) provided between the first slide valve element 15A and the second slide valve element 15B or by the urging force of the compression coil springs 19 so as to be in pressure-contact with the valve seat faces of the first main valve mount 13 and the second main valve mount 14.

The first piston 21 and the second piston 22 are coupled in an integrally movable manner by the coupling body 25. The coupling body 25 has fitted therein the first slide valve element 15A and the second slide valve element 15B of the main valve element 15 and supports them in a state where they are slightly slidable in the horizontal direction and their movements in the vertical direction and the front-to-back direction are substantially blocked.

In this example, the coupling body 25 is formed of a piece of plate member which is vertically long and substantially rectangular in shape and prepared by press-forming, for example. Basically, the coupling body 25 is disposed so as to be perpendicular to the horizontal direction on the axis O (i.e., center line) of the main valve housing 11 (in other words, so as to be in parallel with the valve seat faces of the first main valve mount 13 and the second main valve mount 14).

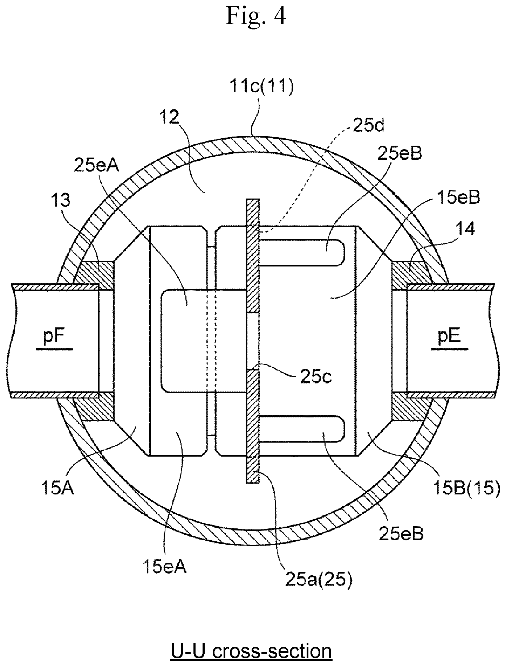

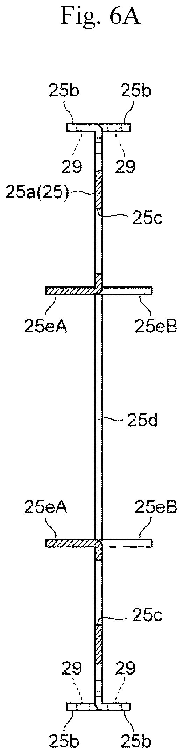

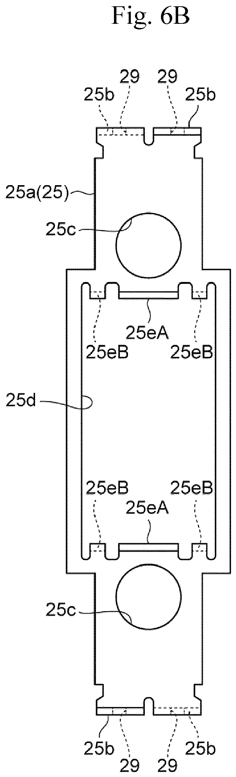

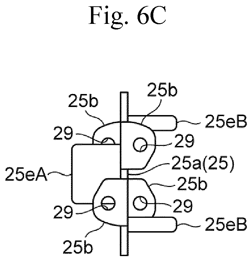

More specifically, as clearly seen in Fig. 4 to Fig. 6C in conjunction with Fig. 1 and Fig. 2, the coupling body 25 includes a flat plate portion 25a that is disposed in parallel with the valve seat faces of the first main valve mount 13 and the second main valve mount 14 on the axis O of the main valve housing 11. The center of the flat plate portion 25a is provided with a rectangular opening 25d, in which the first slide valve element 15A and the second slide valve element 15B of the main valve element 15 are slidably fitted in the horizontal direction, so as to fit and support the main valve element 15 therein.

In this example, in each of the upper and lower edge portions of the rectangular opening 25d formed in the flat plate portion 25a, the central pressing plate portion 25eA with a relatively large width (that is, a rectangular shape with a large width in the front-to-back direction) is provided (integrally with the flat plate portion 25a) so as to be continuous from the central portion (in the front-to-back direction) of the rectangular opening 25d toward the left side (in other words, toward the annular seal face of the first slide valve element 15A that slides on the valve seat face of the first main valve mount 13), and the pair of end pressing plate portions 25eB (four end pressing plate portions 25eB in total on the upper and lower sides) with a relatively small width (that is, a rectangular shape with a small width in the front-to-back direction) is provided (integrally with the flat plate portion 25a) so as to be continuous from the opposite end portions (in the front-to-back direction) of the rectangular opening 25d toward the right side (in other words, toward the annular seal face of the second slide valve element 15B that slides on the valve seat face of the second main valve mount 14).

Herein, the central pressing plate portion 25eA and the end pressing plate portions 25eB are formed by bending (in other words, by cutting and raising) the piece of plate member in an approximately perpendicular direction (to 90°) from the flat plate portion 25a such that the central pressing plate portion 25eA and the end pressing plate portions 25eB are along the upper and lower faces (i.e., outer peripheral faces) of the first slide valve element 15A and the second slide valve element 15B forming the main valve element 15 and are perpendicular to the axis O of the main valve housing 11.

In addition, on each of the upper and lower faces of the first slide valve element 15A and the second slide valve element 15B, the central pressing plate portion 25eA extends beyond the recessed face 15eB formed on each of the upper and lower faces of the second slide valve element 15B to the recessed face 15eA formed on each of the upper and lower faces of the first slide valve element 15A. In this configuration, the approximate left half portion of the central pressing plate portion 25eA is adapted to come into contact with (i.e., to be pressed against) the recessed face 15eA of the first slide valve element 15A. Furthermore, the approximate right half portion of the central pressing plate portion 25eA and the end pressing plate portion 25eB are adapted to come into contact with (i.e., to be pressed against) the recessed face 15eB of the second slide valve element 15B.

In addition, a circular opening 25c (having a diameter approximately equal to that of the ports pF, pE) and a circular opening 25c (having a diameter approximately equal to that of the ports pB, pC) are formed in each of the positions above and below the rectangular opening 25d of the coupling body 25, more specifically, in the position where the circular opening 25c (having a diameter approximately equal to that of the ports pF, pE) is located approximately abeam of the port pF on the lower side of the first main valve mount 13 and the port pE on the lower side of the second main valve mount 14 when the main valve element 15 is in the cooling position (i.e., upper end position), and in the position where the circular opening 25c (having a diameter approximately equal to that of the ports pB, pC) is located approximately abeam of the port pB on the upper side of the first main valve mount 13 and the port pC on the upper side of the second main valve mount 14 when the main valve element 15 is in the heating position (i.e., lower end position).

The upper and lower ends of the coupling body 25 (or the flat plate portion 25a thereof) each include mounting leg portions 25b that are aligned in the front-to-back direction and formed by bending (to 90°) approximately perpendicularly in the opposite directions in the horizontal direction. The mounting leg portions 25b each include an insertion through-hole 29 into which a bolt 30 is inserted to couple the coupling body 25 with the first piston 21 or the second piston 22. It should be noted that the insertion through-hole 29 of the present embodiment has an internal thread formed on its inner peripheral portion and screwed into an external thread of the bolt 30.

Herein, the coupling body 25 is formed to be rotationally symmetrical about the rotation axis perpendicular to the valve seat faces of the first main valve mount 13 and the second main valve mount 14 so as to reduce the occurrence of assembly error.

In this example, therefore, the first slide valve element 15A and the second slide valve element 15B of the main valve element 15 fitted and supported in the coupling body 25 are pressed and moved by the central pressing plate portion 25eA and the pair of end pressing plate portions 25eB provided in the rectangular opening 25d (or the upper and lower edge portions thereof) of the coupling body 25 and are moved between the cooling position (i.e., upper end position) and the heating position (i.e., lower end position) along with the reciprocating motion of the first and second pistons 21, 22. In this example, the positions close to the annular seal faces of the first slide valve element 15A and the second slide valve element 15B of the main valve element 15 (in other words, the portions close to the valve seat faces of the first main valve mount 13 and the second main valve mount 14) are pressed by the aforementioned central pressing plate portion 25eA and the pair of end pressing plate portions 25eB.

### [Operation of six-way valve body 10]

Next, the operation of the six-way valve body 10 having the above-described configuration will be described.

When the main valve element 15 disposed within the main valve housing 11 is in the heating position (i.e., lower end position) (i.e., second communication state as illustrated in Fig. 2), the second operation chamber 32 is allowed to communicate with the port pA as the discharge-side high-pressure port and the first operation chamber 31 is allowed to communicate with the port pD as the suction-side low-pressure port via the four-way pilot valve 90 (described later), whereby a high-pressure refrigerant is introduced into the second operation chamber 32 and the high-pressure refrigerant is discharged from the first operation chamber 31. As a result, the pressure in the second operation chamber 32 at one end (i.e., lower end) of the main valve chamber 12 becomes higher than the pressure in the first operation chamber 31 at the other end (i.e., upper end) of the main valve chamber 12, and as illustrated in Fig. 1, the first and second pistons 21, 22 and the main valve element 15 move upward, so that the first piston 21 abuts and engages the upper end cap member 11A, and the main valve element 15 is located in the cooling position (i.e., upper end position) (i.e., first communication state as illustrated in Fig. 1).

This configuration allows the port pA and the port pB to communicate with each other (through the first U-turn passage 16A), allows the port pC and the port pD to communicate with each other (through the second U-turn passage 16B), and allows the port pE and the port pF to communicate with each other (through the main valve chamber 12), and thus the cooling operation is performed in the heat pump cooling and heating system.

When the main valve element 15 is in the cooling position (i.e., upper end position) (i.e., first communication state as illustrated in Fig. 1), the first operation chamber 31 is allowed to communicate with the port pA as the discharge-side high-pressure port and the second operation chamber 32 is allowed to communicate with the port pD as the suction-side low-pressure port via the four-way pilot valve 90 (described later), whereby a high-pressure refrigerant is introduced into the first operation chamber 31 and the high-pressure refrigerant is discharged from the second operation chamber 32. As a result, the pressure in the first operation chamber 31 at the other end (i.e., upper end) of the main valve chamber 12 becomes higher than the pressure in the second operation chamber 32 at the one end (i.e., lower end) of the main valve chamber 12, and as illustrated in Fig. 2, the first and second pistons 21, 22 and the main valve element 15 move downward, so that the second piston 22 abuts and engages the lower end cap member 11B, and the main valve element 15 is located in the heating position (i.e., lower end position) (i.e., second communication state as illustrated in Fig. 2).

This configuration allows the port pA and the port pF to communicate with each other (through the first U-turn passage 16A), allows the port pE and the port pD to communicate with each other (through the second U-turn passage 16B), and allows the port pC and the port pB to communicate with each other (through the main valve chamber 12), and thus the heating operation is performed in the heat pump cooling and heating system.

### [Configuration of four-way pilot valve 90]

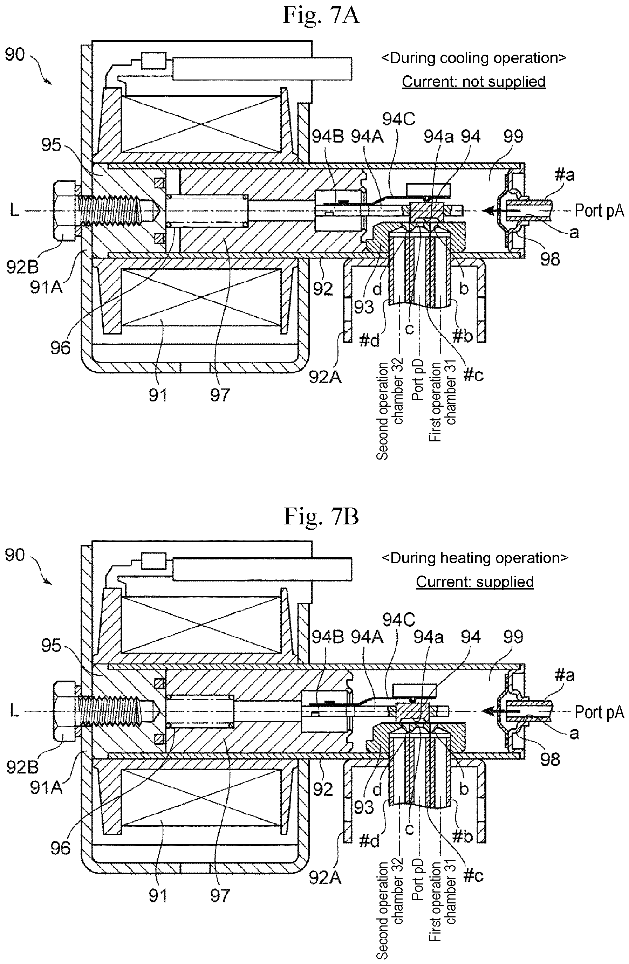

The structure of the four-way pilot valve 90 as a pilot valve is well known. As illustrated in the enlarged views of Fig. 7A and Fig. 7B, the four-way pilot valve 90 includes a valve case 92 made of a cylindrical straight pipe and having an electromagnetic coil 91 externally fitted around and securely fixed to the outer periphery on the proximal end (i.e., left end). The valve case 92 includes an attractor 95, a compression coil spring 96, and a plunger 97 disposed in series in this order from the proximal end.

The left end of the valve case 92 is sealed and joined to a flanged portion (i.e., outer peripheral terrace portion) of the attractor 95 through welding or the like. The attractor 95 is securely fastened to a cover case 91A that covers the outer periphery of the electromagnetic coil 91 for energization by a bolt 92B.

Meanwhile, the open right end of the valve case 92 has hermetically attached thereto a cap member 98 with a filter, which has a thin pipe insertion hole (i.e., high-pressure introduction port a) for introducing a high-pressure refrigerant, through welding, brazing, swaging, or the like. An area surrounded by the cap member 98, the plunger 97, and the valve case 92 define a valve chamber 99. The valve chamber 99 is adapted to receive a high-pressure refrigerant via the port (i.e., discharge-side high-pressure port) pA through a high-pressure thin pipe #a that is hermetically inserted into the thin pipe insertion hole (i.e., high-pressure introduction port a) of the cap member 98.

In addition, the valve case 92 includes a valve mount 93 having an inner end face as a flat valve seat face hermetically joined thereto between the plunger 97 and the cap member 98 through brazing or the like. This valve seat face (i.e., inner end face) of the valve mount 93 includes, in this order from the distal end (i.e., right end), a port b coupled to the first operation chamber 31 of the six-way valve body 10 via a thin pipe #b, a port c coupled to the port (i.e., suction-side low-pressure port) pD via a thin pipe #c, and a port d coupled to the second operation chamber 32 via a thin pipe #d so as to align laterally at predetermined intervals along the length of the valve case 92 (i.e., horizontal direction).

The plunger 97 disposed to face the attractor 95 is basically columnar, and is slidable within the valve case 92 in the axial direction (i.e., the direction along the center line L of the valve case 92). The end of the plunger 97 opposite to the attractor 95 has securely attached thereto a valve body holder 94A, which holds a valve body 94 at its free end so as to be slidable in the thickness direction, as well as a fitting 94B at its proximal end, through press fitting, swaging or the like. This valve body holder 94A has attached thereto a plate spring 94C that urges the valve body 94 in a direction (i.e., thickness direction) to press it against the valve mount 93. The valve body 94 is adapted to slide on the valve seat face of the valve mount 93 along with the horizontal movement of the plunger 97 while the valve body 94 is in contact with the valve seat face of the valve mount 93 so as to switch the communication state of the ports b, c, d opening on the valve seat face of the valve mount 93.

In addition, the valve body 94 includes a recess 94a having a size that allows the adjacent ports b-c or ports c-d of the three ports b to d opening on the valve seat face of the valve mount 93 to selectively communicate with each other.

In addition, the compression coil spring 96 is disposed in a compressed state between the attractor 95 and the plunger 97 and is adapted to urge the plunger 97 in a direction (i.e., to the right in the drawing) to separate it from the attractor 95. In this example, the valve mount 93 (or the left end thereof) acts as a stopper for blocking the rightward movement of the plunger 97. It is needless to mention that this stopper may have a configuration other than the one described above.

It should be noted that the above-described four-way pilot valve 90 is attached to an appropriate position such as the back side of the six-way valve body 10 by a fitting 92A.

### [Operation of four-way pilot valve 90]

In the four-way pilot valve 90 having the above-described configuration, when current is not supplied to the electromagnetic coil 91, as illustrated in Fig. 1 and Fig. 7A, the plunger 97 is pressed and moved to the position where its right end abuts the valve mount 93 by the urging force of the compression coil spring 96. In this state, the valve body 94 is located above the port b and the port c, and the port b and the port c are allowed to communicate with each other by the recess 94a, and the port d and the valve chamber 99 are allowed to communicate with each other. Accordingly, a high-pressure fluid flowing into the port (i.e., discharge-side high-pressure port) pA is introduced into the second operation chamber 32 through the high-pressure thin pipe #a → the valve chamber 99 → the port d → the thin pipe #d → the port p12, and the high-pressure fluid in the first operation chamber 31 is discharged through the port p11 → the thin pipe #b → the port b → the recess 94a → the port c → the thin pipe #c → the port (i.e., suction-side low-pressure port) pD.

Meanwhile, when current is supplied to the electromagnetic coil 91, as illustrated in Fig. 2 and Fig. 7B, the plunger 97 is attracted to the position where its left end abuts the attractor 95 by the suction force of the attractor 95 (against the urging force of the compression coil spring 96). At this time, the valve body 94 is located above the port c and the port d, and the port c and the port d are allowed to communicate with each other by the recess 94a, and the port b and the valve chamber 99 are allowed to communicate with each other. Accordingly, a high-pressure fluid flowing into the port (i.e., discharge-side high-pressure port) pA is introduced into the first operation chamber 31 through the high-pressure thin pipe #a → the valve chamber 99 → the port b → the thin pipe #b → the port p 11, and the high-pressure fluid in the second operation chamber 32 is discharged through the port p12 → the thin pipe #d → the port d → the recess 94a → the port c → the thin pipe #c → the port (suction-side low-pressure port) pD.

Therefore, when current is not supplied to the electromagnetic coil 91, the main valve element 15 of the six-way valve body 10 moves from the heating position (i.e., second communication state) to the cooling position (i.e., first communication state) to switch the flow channel as described above. Meanwhile, when current is supplied to the electromagnetic coil 91, the main valve element 15 of the six-way valve body 10 moves from the cooling position (i.e., first communication state) to the heating position (i.e., second communication state) to switch the flow channel as described above.

As described above, the six-way switching valve 1 of the present embodiment switches the energization of the electromagnetic four-way pilot valve 90 such that the main valve element 15 forming the six-way valve body 10 moves within the main valve chamber 12 by using the pressure difference between the high-pressure fluid (i.e., fluid flowing in the port pA as a high-pressure part) and the low-pressure fluid (i.e., fluid flowing in the port pD as a low-pressure part) flowing through the six-way switching valve 1, whereby the communication state of the ports (six ports in total) provided for the main valve housing 11 is switched, and the heat pump cooling and heating system can switch from the heating operation to the cooling operation, and from the cooling operation to the heating operation.

### [Operational advantages of six-way switching valve 1]

As can be understood from the above description, in the six-way switching valve 1 of the present embodiment, the coupling body 25 for moving the main valve element 15 within the main valve chamber 12 along with the reciprocating motion of the first and second pistons 21, 22 is formed of a piece of plate member, which includes the flat plate portion 25a disposed in parallel with the valve seat faces of the first and second main valve mounts 13, 14. The flat plate portion 25a is adapted to fit and support the main valve element 15 therein and, along with the reciprocating motion of the first and second pistons 21, 22, press and move the main valve element 15 by means of the pressing plate portions (i.e., the central pressing plate portion 25eA and the end pressing plate portions 25eB formed integrally with the flat plate portion 25a) extending toward the annular seal faces of the pair of the first and second slide valve elements 15A, 15B forming the main valve element 15, which slide on the valve seat faces of the first and second main valve mounts 13, 14. Thus, with a simple configuration in which a small improvement is added to the coupling body 25, the six-way switching valve 1 of the present embodiment can press the positions close to the seal faces (i.e., both annular seal faces of the two first and second slide valve elements 15A, 15B) of the main valve element 15 in switching the flow channel, reduce the occurrence of a stick-slip phenomenon, and thus can effectively reduce the occurrence of abnormal sounds or the wear of the seal faces of the main valve element 15, as compared to the conventional flow channel switching valve in which the coupling body is formed of a piece of plate member disposed in parallel with the valve seat face of the main valve mount on the center line (i.e., axis) of the main valve housing, for example.

### <Second embodiment>

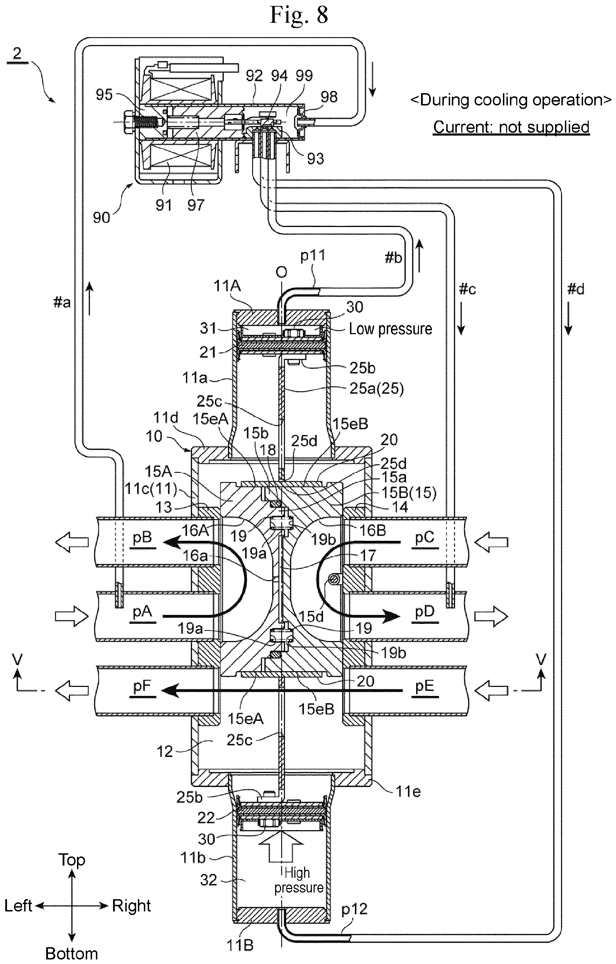

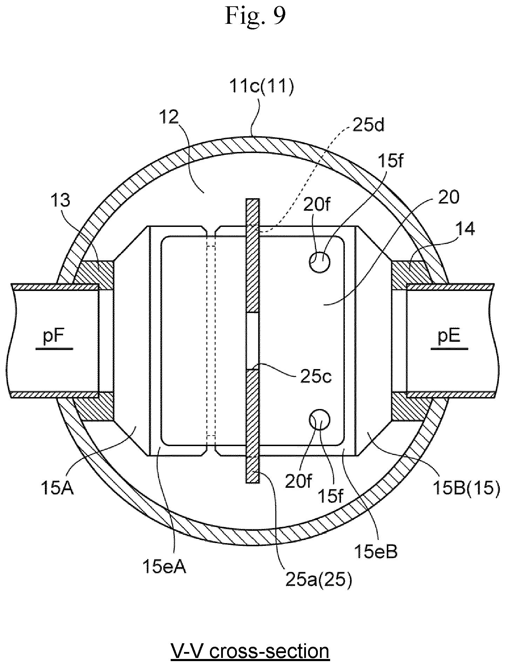

Fig. 8 is a vertical cross-sectional view showing a second embodiment of the six-way switching valve as the flow channel switching valve in accordance with the present invention. Fig. 9 is a cross-sectional view in the direction of the arrow V-V in Fig. 8.

A six-way switching valve 2 of the illustrated second embodiment has configurations that are substantially equal to those of the six-way switching valve 1 of the first embodiment except that mainly the configuration of the coupling portion between the piston and the main valve element is different. Therefore, the portions corresponding to the components of the six-way switching valve 1 are denoted by the same reference numerals, and the overlapping descriptions will be omitted. Hereinafter, mainly the differences will be described.

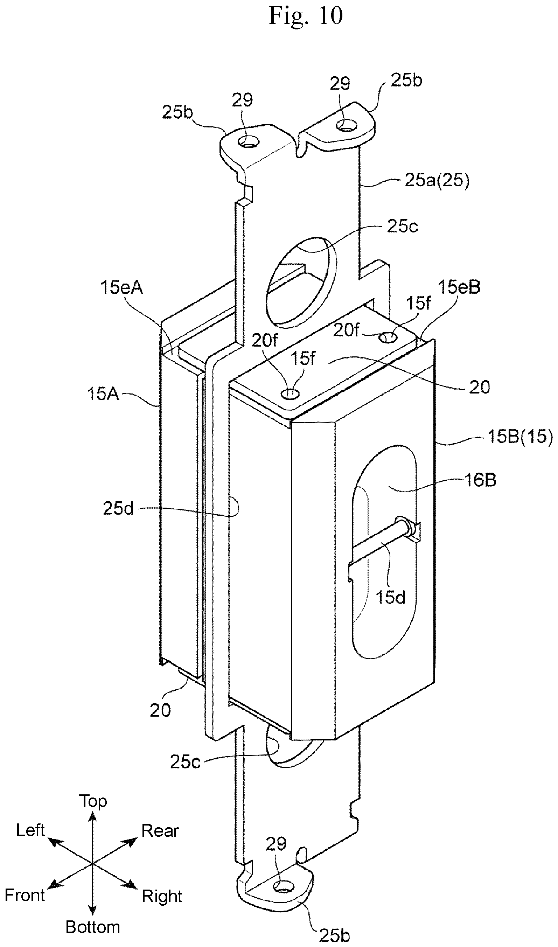

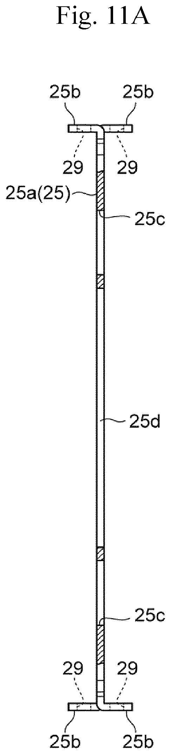

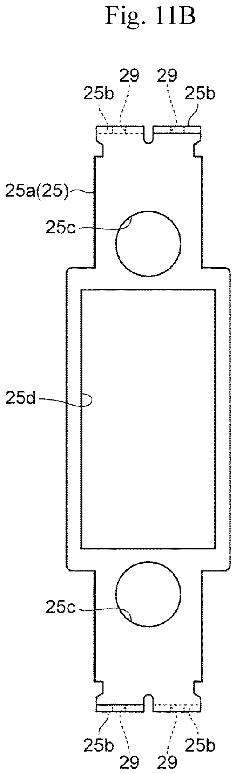

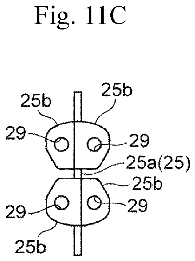

Like the six-way switching valve 1 of the first embodiment, the six-way switching valve 2 of the illustrated embodiment is, for example, a slide-type flow channel switching valve that is used as a six-way switching valve in a heat pump cooling and heating system. In this example, as compared to the six-way switching valve 1 of the first embodiment, the central pressing plate portion 25eA and the end pressing plate portions 25eB in the edge portions of the rectangular opening 25d formed in the coupling body 25 (or the flat plate portion 25a thereof) are omitted (see also Fig. 10 and Fig. 11A to Fig. 11C).

Meanwhile, in this example, on each of the upper and lower faces (or the recessed faces 15eA, 15eB formed thereon) of the first slide valve element 15A and the second slide valve element 15B forming the main valve element 15, a pressing plate (i.e., pressing plate portion) 20, which is formed of a plate member (i.e., flat plate) with an approximately rectangular shape prepared by press-forming, for example, and made of, for example, metal material (the same material as that of the coupling body 25, for example) having a higher rigidity than that of the main valve element 15 (or the first and second slide valve elements 15A, 15B thereof), is securely disposed through press fitting, welding, insert forming, for example.

In this example, the pressing plate 20 has an outer shape that substantially entirely covers the recessed faces 15eA, 15eB formed on the upper and lower faces of the first slide valve element 15A and the second slide valve element 15B forming the main valve element 15 (see, in particular, Fig. 9), and is disposed such that the pressing plate 20 is along the recessed faces 15eA, 15eB and perpendicular to the axis (i.e., center line) O of the main valve housing 11. The right end of the pressing plate 20 extending toward the right side (in other words, toward the annular seal face of the second slide valve element 15B that slides on the valve seat face of the second main valve mount 14) is fixed to the upper or lower face (i.e., the recessed face 15eB formed thereon) of the second slide valve element 15B and the left end of the pressing plate 20 extending toward the left side (in other words, toward the annular seal face of the first slide valve element 15A that slides on the valve seat face of the first main valve mount 13) extends to the upper or lower face (i.e., the recessed face 15eA formed thereon) of the first slide valve element 15A (in a slidable manner without being fixed) such that the horizontal movement (i.e., relative movement) of the first and second slide valve elements 15A, 15B is not restricted. The left part of the pressing plate 20 is adapted to come into contact with (i.e., to be pressed against) the recessed face 15eA of the first slide valve element 15A. Furthermore, the right part of the pressing plate 20 with respect to the center thereof is adapted to come into contact with (i.e., to be pressed against) the recessed face 15eB of the second slide valve element 15B.

In this example, therefore, the first slide valve element 15A and the second slide valve element 15B of the main valve element 15 fitted and supported in the coupling body 25 are pressed and moved by the portion of the rectangular opening 25d of the coupling body 25 and are moved between the cooling position (i.e., upper end position) and the heating position (i.e., lower end position) along with the reciprocating motion of the first and second pistons 21, 22. In this example, the portion of the rectangular opening 25d of the coupling body 25 comes into contact with the pressing plate 20 (or approximate center thereof) fixed to the outer peripheral face of the main valve element 15, whereby the first slide valve element 15A and the second slide valve element 15B of the main valve element 15 are pressed and moved.

It should be noted that in this example, the pressing plate 20 is fixed by (two) fitting round holes 20f provided (in the front-to-back direction) in the pressing plate 20 (in the vicinity of the right end thereof) that are fitted into (two) positioning protrusions 15f provided (in the front-to-back direction) on the recessed face 15eB on the upper or lower face of the second slide valve element 15B, for example (see, in particular, Fig. 9 and Fig. 10).

As described above, also in the six-way switching valve 2 of the second embodiment, the coupling body 25 for moving the main valve element 15 in the main valve chamber 12 along with the reciprocating motion of the first and second pistons 21, 22 is formed of a piece of plate member, which includes the flat plate portion 25a disposed in parallel with the valve seat faces of the first and second main valve mounts 13, 14. The flat plate portion 25a is adapted to fit and support the main valve element 15 therein and, along with the reciprocating motion of the first and second pistons 21, 22, press and move the main valve element 15 by means of the pressing plate portion (i.e., the pressing plate 20 fixed to the outer peripheral face of the main valve element 15) extending toward the annular seal faces of the pair of the first and second slide valve elements 15A, 15B forming the main valve element 15, which slide on the valve seat faces of the first and second main valve mounts 13, 14. Thus, with a simple configuration in which a small improvement is added to the main valve element 15, the six-way switching valve 2 of the present embodiment can press the positions close to the seal faces (i.e., both annular seal faces of the two first and second slide valve elements 15A, 15B) of the main valve element 15 in switching the flow channel, reduce the occurrence of a stick-slip phenomenon, and thus can effectively reduce the occurrence of abnormal sounds or the wear of the seal faces of the main valve element 15, as compared to the conventional flow channel switching valve in which the coupling body is formed of a piece of plate member disposed in parallel with the valve seat face of the main valve mount on the center line (i.e., axis) of the main valve housing, for example.

In addition, in the second embodiment, although the use of the pressing plate 20 increases the number of components, a larger pressing area (pressure area) of the main valve element 15 (or the first and second slide valve elements 15A, 15B thereof) can be secured. This can further reduce the stress on the main valve element 15 (or the first and second slide valve elements 15A, 15B thereof).

### <Third embodiment>

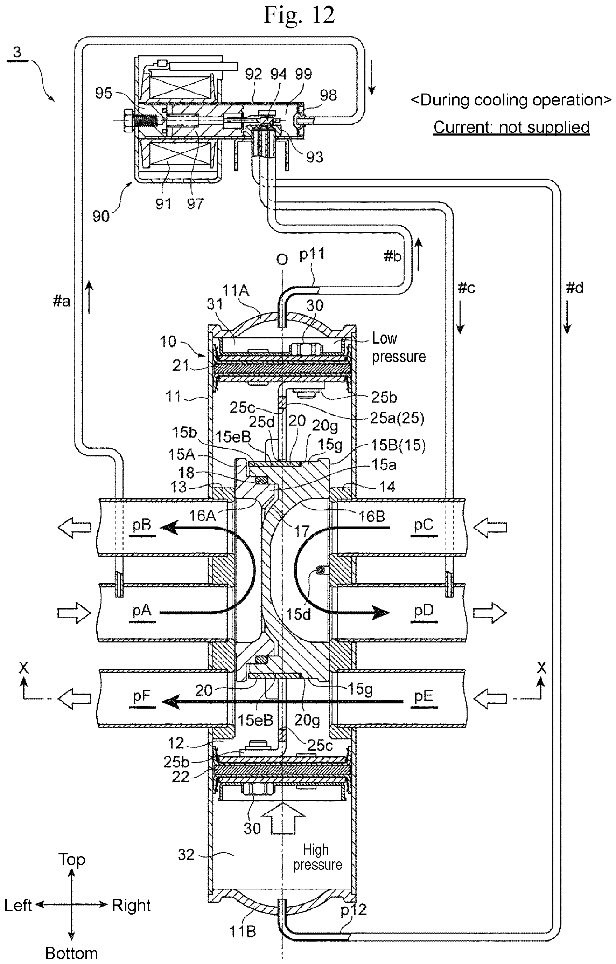

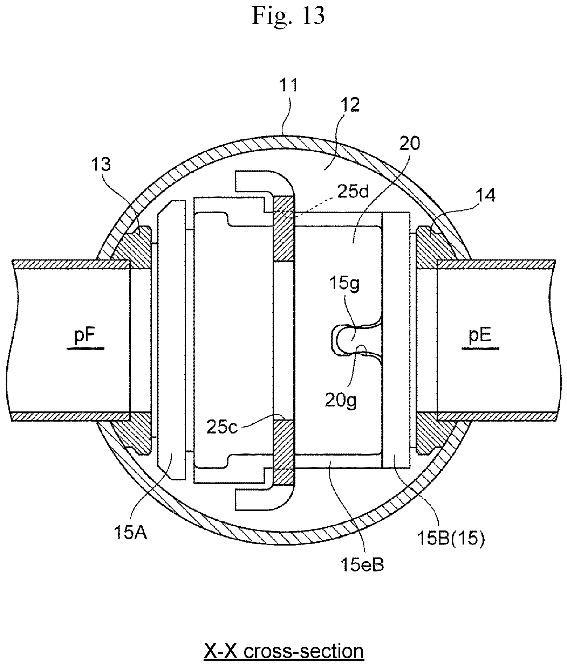

Fig. 12 is a vertical cross-sectional view showing a third embodiment of the six-way switching valve as the flow channel switching valve in accordance with the present invention. Fig. 13 is a cross-sectional view in the direction of the arrow X-X in Fig. 12.

A six-way switching valve 3 of the illustrated third embodiment has configurations that are substantially equal to those of the six-way switching valve 2 of the second embodiment except that mainly the configurations of the main valve housing, the main valve element, the coupling body, and the like are slightly different. Therefore, the portions corresponding to the components of the six-way switching valve 2 are denoted by the same reference numerals, and the overlapping descriptions will be omitted. Hereinafter, mainly the differences will be described.

Like the six-way switching valve 2 of the second embodiment, the six-way switching valve 3 of the illustrated embodiment is, for example, a slide-type flow channel switching valve that is used as a six-way switching valve in a heat pump cooling and heating system. The six-way switching valve 3 of the illustrated embodiment has a smaller size and a smaller weight as compared to the six-way switching valve 2 of the second embodiment.

That is, in this example, the trunk portion 11c of the main valve housing 11 is formed to have a diameter equal to that of the first and second piston portions 11a, 11b, and the first and second piston portions 11a, 11b and the trunk portion 11c are formed in an integral manner (as a single component).

In addition, the main valve element 15 (in particular, the first slide valve element 15A on the high-pressure side thereof) is formed to have a relatively small thickness (specifically, the thickness in the horizontal direction is relatively small), and the recessed face 15eA on the upper and lower faces of the first slide valve element 15A and the communication hole 16a of the first slide valve element 15A are omitted. Though not illustrated in Fig. 12, in this example as well, four compression coil springs adapted to urge the first slide valve element 15A and the second slide valve element 15B in the opposite directions are disposed between the first slide valve element 15A and the second slide valve element 15B.

The pressure applied by the pressure chamber 17 (or the high-pressure refrigerant therein) causes the right face of the second slide valve element 15B (or the annular seal face thereof) to be urged against the valve seat face of the second main valve mount 14, and the difference between a pressure load applied by the pressure chamber 17 (or the high-pressure refrigerant therein) and a pressure load applied by the refrigerant (i.e., high-pressure refrigerant) flowing through the first U-turn passage 16A causes the left face of the first slide valve element 15A (or the annular seal face thereof) to be urged against the valve seat face of the first main valve mount 13.

In addition, since the recessed face 15eA on the side of the first slide valve element 15A is omitted, the pressing plate 20 in this example has an outer shape that substantially entirely covers the recessed face 15eB formed on each of the upper and lower faces of the second slide valve element 15B forming the main valve element 15 (see, in particular, Fig. 13), and is disposed along the recessed face 15eB such that the pressing plate 20 is adapted to come into contact with (i.e., to be pressed against) only the recessed face 15eB.

In this example, therefore, the portion of the rectangular opening 25d of the coupling body 25 comes into contact with the pressing plate 20 (or approximate center thereof) fixed to the outer peripheral face of the main valve element 15, whereby the first slide valve element 15A and the second slide valve element 15B of the main valve element 15 are pressed and moved, and the first slide valve element 15A is pressed and moved (integrally with the second slide valve element 15B) by means of the second slide valve element 15B.

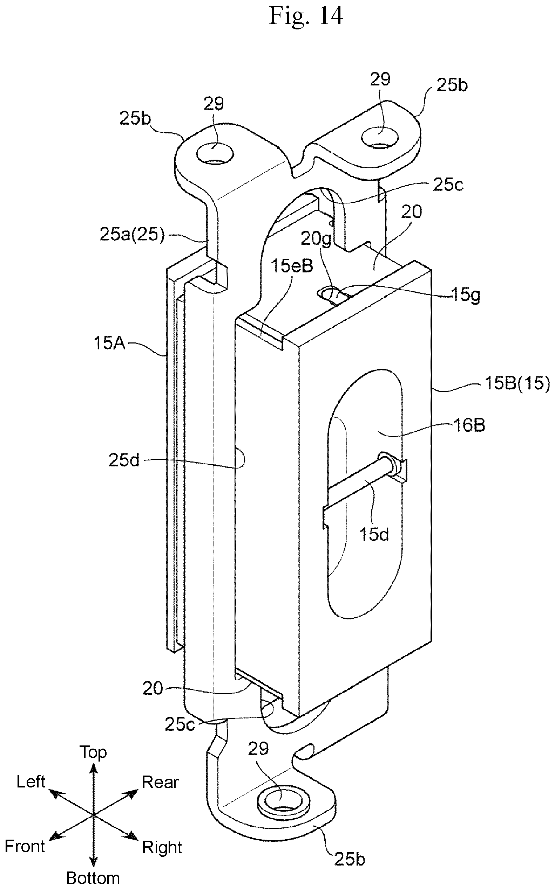

It should be noted that in this example, the pressing plate 20 is fixed by a fitting cutout 20g provided in the pressing plate 20 (or the outer edge thereof) that is fitted into a positioning protrusion 15g provided on the recessed face 15eB on the upper or lower face of the second slide valve element 15B, for example (see, in particular, Fig. 13 and Fig. 14).

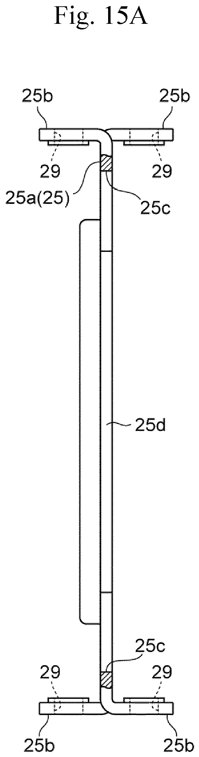

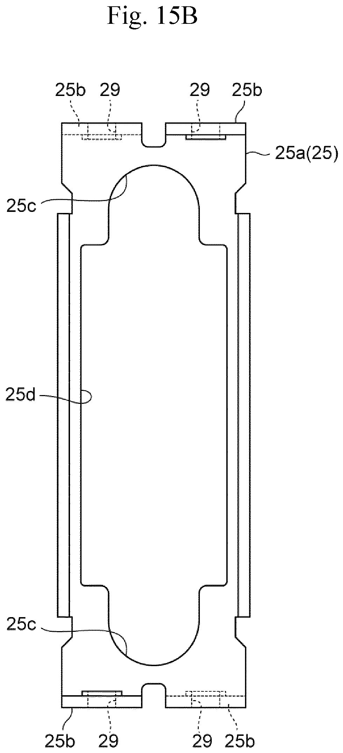

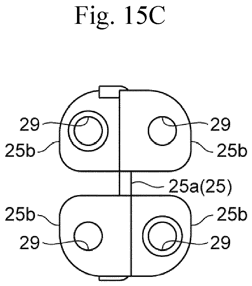

Furthermore, in this example, the vertical length (i.e., the length along the axis O) of the coupling body 25 is set smaller as compared to the six-way switching valve 2 of the second embodiment, and the rectangular opening 25d formed in the coupling body 25 (or the flat plate portion 25a thereof) is formed to be continuous to the circular opening 25c formed in each of the positions above and below the rectangular opening 25d (see also Fig. 14 and Fig. 15A to Fig. 15C). In this example, therefore, only the front and back portions in the portion of the rectangular opening 25d of the coupling body 25 come into contact with the pressing plate 20 (or approximate center thereof) fixed to the outer peripheral face of the main valve element 15, whereby the first slide valve element 15A and the second slide valve element 15B of the main valve element 15 are pressed and moved.

As described above, also in the six-way switching valve 3 of the third embodiment, the coupling body 25 for moving the main valve element 15 in the main valve chamber 12 along with the reciprocating motion of the first and second pistons 21, 22 is formed of a piece of plate member, which includes the flat plate portion 25a disposed in parallel with the valve seat faces of the first and second main valve mounts 13, 14. The flat plate portion 25a is adapted to fit and support the main valve element 15 therein and, along with the reciprocating motion of the first and second pistons 21, 22, press and move the main valve element 15 by means of the pressing plate portion (i.e., the pressing plate 20 fixed to the outer peripheral face of the main valve element 15) extending toward the annular seal faces of the pair of the first and second slide valve elements 15A, 15B forming the main valve element 15, which slide on the valve seat faces of the first and second main valve mounts 13, 14. Thus, it is needless to mention that the same operational advantage as that of the aforementioned six-way switching valve 2 of the second embodiment can be obtained.

It should be noted that in the six-way switching valves 1 to 3 of the first to third embodiments, the examples of the six-way switching valves in the heat pump cooling and heating system have been described. However, it is needless to mention that the number or position of ports provided for the main valve housing 11 (or the main valve chamber 12 thereof), the configuration or shape of the main valve housing 11, the configuration or shape of the main valve element 15 disposed within the main valve housing 11 (or the main valve chamber 12 thereof), and the like are not limited to the illustrated examples.

In addition, in the six-way switching valves 1 to 3 of the first to third embodiments, the configuration of driving the main valve element 15 within the main valve chamber 12 with use of the four-way pilot valve 90 has been described. However, a motor may be used for example instead of the four-way pilot valve 90 to drive the main valve element 15 within the main valve chamber 12.

In addition, it is needless to mention that the six-way switching valves 1 to 3 of the first to third embodiments may be incorporated into not only the heat pump cooling and heating system but also to the other systems, devices, equipment, and the like.

### Reference Signs List

- 1: Six-way switching valve (flow channel switching valve) (first embodiment)
- 2: Six-way switching valve (flow channel switching valve) (second embodiment)
- 3: Six-way switching valve (flow channel switching valve) (third embodiment)
- 10: Six-way valve body
- 11: Main valve housing
- 11A: Upper end cap member
- 11B: Lower end cap member
- 11a: First piston portion
- 11b: Second piston portion
- 11c: Trunk portion
- 12: Main valve chamber
- 13: First main valve mount (valve seat)
- 14: Second main valve mount (valve seat)
- 15: Main valve element
- 15A: First slide valve element
- 15B: Second slide valve element
- 15a: Fitting protrusion of first slide valve element
- 15b: Tubular portion of second slide valve element
- 15eA: Upper and lower recessed faces of first slide valve element
- 15eB: Upper and lower recessed faces of second slide valve element
- 15f: Positioning protrusion (second embodiment)
- 15g: Positioning protrusion (third embodiment)
- 16A: First U-turn passage (communication passage)
- 16B: Second U-turn passage (communication passage)
- 16a: Communication hole
- 17: Pressure chamber
- 18: O-ring
- 19: Compression coil spring
- 20: Pressing plate (pressing plate portion) (second, third embodiments)
- 20f: Fitting round hole (second embodiment)
- 20g: Fitting cutout (third embodiment)
- 21: First piston
- 22: Second piston
- 25: Coupling body
- 25a: Flat plate portion
- 25b: Mounting leg portion
- 25c: Circular opening
- 25d: Rectangular opening
- 25eA: Central pressing plate portion (first embodiment)
- 25eB: End pressing plate portion (first embodiment)
- 31: First operation chamber
- 32: Second operation chamber
- 90: Four-way pilot valve
- pA, pB, pC, pD, pE, pF: Port

## Claims

1. A flow channel switching valve comprising: a tubular main valve housing including a piston and a main valve chamber; a main valve mount having a valve seat face with a plurality of ports; a slide-type main valve element arranged within the main valve chamber in a movable manner in an axial direction, the slide-type main valve element being adapted to slidably come into contact with the valve seat face; and a coupling body for moving the main valve element along with a reciprocating motion of the piston, wherein the main valve element is moved within the main valve chamber by the coupling body so that communication of the plurality of ports is switched,
wherein:
the main valve housing is provided with a plurality of ports on each of opposite sides with respect to an axis thereof, the main valve element includes a pair of slide valve elements that is disposed with back sides facing each other in a direction perpendicular to the valve seat face of the main valve mount, the pair of slide valve elements each having a U-turn passage that allows the plurality of ports to selectively communicate with each other; and
the coupling body is made of a piece of plate member including a flat plate portion disposed in parallel with the valve seat face of the main valve mount, the flat plate portion being adapted to fit and support the main valve element therein, and along with the reciprocating motion of the piston, press and move the main valve element by means of a pressing plate portion extending toward a seal face of at least one of the pair of slide valve elements of the main valve element, the seal face being adapted to slide on the valve seat face of the main valve mount.

2. The flow channel switching valve according to claim 1, wherein the flat plate portion is disposed on the axis of the tubular main valve housing.

3. The flow channel switching valve according to claim 1 or 2, wherein the flat plate portion is provided with an opening for fitting each of the pair of slide valve elements therein in a slidable manner in the direction perpendicular to the valve seat face of the main valve mount, and for pressing and moving each of the pair of slide valve elements in an integrally movable manner in the axial direction along with the reciprocating motion of the piston.

4. The flow channel switching valve according to claim 1 or 2, wherein the pressing plate portion is formed to be continuous from the flat plate portion.

5. The flow channel switching valve according to claim 3, wherein the pressing plate portion is formed to be continuous from an edge portion of the opening of the flat plate portion.

6. The flow channel switching valve according to claim 4 or 5, wherein the pressing plate portion includes a first pressing plate portion extending from the flat plate portion toward the seal face of one of the pair of slide valve elements and a second pressing plate portion extending from the flat plate portion toward the seal face of the other one of the pair of slide valve elements.

7. The flow channel switching valve according to any one of claims 4 to 6, wherein the pressing plate portion is formed by bending from the flat plate portion in the perpendicular direction.

8. The flow channel switching valve according to any one of claims 4 to 7, wherein the pressing plate portion is formed in the direction perpendicular to the axis of the tubular main valve housing.

9. The flow channel switching valve according to any one of claims 4 to 8, wherein the pressing plate portion is formed along an outer peripheral face of the main valve element.

10. The flow channel switching valve according to any one of claims 1 to 3, wherein the pressing plate portion is fixed to an outer peripheral face of the main valve element.

11. The flow channel switching valve according to claim 10, wherein the pressing plate portion is made of a flat plate fixed to the outer peripheral face of the main valve element.

12. The flow channel switching valve according to claim 10 or 11, wherein the pressing plate portion is fixed to one of the pair of slide valve elements of the main valve element.

13. The flow channel switching valve according to any one of claims 10 to 12, wherein the pressing plate portion is adapted to come into contact with both of the pair of slide valve elements of the main valve element.

14. The flow channel switching valve according to any one of claims 10 to 12, wherein the pressing plate portion is adapted to come into contact with only one of the pair of slide valve elements of the main valve element.

15. The flow channel switching valve according to any one of claims 10 to 14, wherein the pressing plate portion is fixed in the direction perpendicular to the axis of the tubular main valve housing.

16. The flow channel switching valve according to any one of claims 10 to 15, wherein the pressing plate portion is fixed along the outer peripheral face of the main valve element.

17. The flow channel switching valve according to any one of claims 1 to 16, wherein the pressing plate portion is fitted into a recessed face provided on an outer peripheral face of the main valve element.

18. The flow channel switching valve according to any one of claims 1 to 17, wherein the pressing plate portion is made of material having a higher rigidity than that of the main valve element.

19. The flow channel switching valve according to any one of claims 1 to 18, wherein the coupling body is formed to be rotationally symmetrical about a rotation axis perpendicular to the valve seat face of the main valve mount.
